# EUROPEAN PATENT APPLICATION

(11) **EP 0 690 389 A1**
(43) Date of publication of application: **03.01.1996**
(21) Application number: 95109732.8
(22) Date of filing: 22.06.1995
(51) Int. Cl.: G06F 15/02, G04G 1/00

(54) **Information recording mediums and electronic apparatus which use the information recording mediums**

(30) Priority: 29.06.1994 JP 171883/94
(71) Applicant: CASIO COMPUTER CO., LTD., Shinjuku-ku, Tokyo 163-02 (JP)
(72) Inventor: Takasu, Akihide, c/o Casio Computer Co., Ltd., cho 3-chome, Hamura-shi, Tokyo, 205 (JP)
(74) Representative: Grünecker, Kinkeldey, Stockmair & Schwanhäusser Anwaltssozietät

(57) **Abstract**

Stored in a floppy disk (13) is program data which causes the display screen of a display (21) of a personal computer (20) to blink to output data optically. The floppy disk (13) is placed in the personal computer (20) and the display screen of the display (21) is caused to blink in accordance with the program data to output data optically. The output data is received by a light receipt unit (9) of an electronic wristwatch (1). The received data is reshaped and the resulting data is stored in a RAM (7).

## Description

The present invention relates to information recording mediums and electronic apparatus which use the information recording mediums.

Conventionally, data transmission/reception is performed through an interface or cable between an electronic device such as an electronic wristwatch or electronic notebook and an external device such as a personal computer. In this case, program data used to control data transmission is required in the data transmission. Usually, an electronic wristwatch or electronic notebook is fed with program data by a semiconductor memory such as a ROM while a personal computer is fed with program data by a semiconductor memory such as a ROM as well as a floppy disk.

In order to perform data transmission between an electronic device such as an electronic wristwatch or electronic notebook and an external device such as a personal computer, an interface or cable is required to be interconnected between those devices, but a preparation of transmission including this interconnection is troublesome and complicated, disadvantageously.

Since data transmission requires the knowledge of hardware, a rank beginner can not perform such data transmission easily.

Since electronic devices such as electronic notebooks and wristwatches are required to have connectors to which cables should be connected, the cost of the electronic device bodies is expensive, disadvantageously.

It is therefore an object of the present invention to provide an information recording medium which is capable of transmitting data easily without requiring any interfaces/cables, and an electronic apparatus which uses such information recording medium.

In order to achieve the above object, the present invention provides an information recording medium placed in an electronic device which includes a key-in unit and a display, comprising:
data storage means for storing data; and
program data storage means which contains program data used to optically output data stored in the data storage means by optically blinking a part of the display means.
FIG. 1 is a block diagram indicative of the circuit construction of an electronic wristwatch and a part of the circuit construction of a personal computer as a first embodiment of the present invention;
FIG. 2 illustrates the contents of a memory of the electronic wristwatch of the first embodiment;
FIG. 3 is a front view of the electronic wristwatch of the first embodiment;
FIG. 4 is a transitional diagram indicative of transition of the mode states of the respective functions of the electronic wristwatch of the first embodiment;
FIG. 5 is a front view indicative of the personal computer of the first embodiment;
FIG. 6 is a block diagram indicative of the circuit construction of the personal computer of the first embodiment;
FIG. 7A illustrates the features of data transmission between the electronic wristwatch and the personal computer of the first embodiment;
FIG. 7B illustrates the features of data transmission between the electronic wristwatch and the personal computer of the first embodiment;
FIG. 8 is a flow chart indicative of the operation of the electronic wristwatch of the first embodiment;
FIG. 9 is a flow chart indicative of another operation of the electronic wristwatch of the first embodiment;
FIG. 10 is a flow chart indicative of data transmission by the personal computer of the first embodiment;
FIG. 11 is a block diagram indicative of the circuit construction of an electronic wristwatch and a part of the circuit construction of a personal computer as a second embodiment of the present invention; and
FIG. 12 is a block diagram indicative of the circuit construction of the personal computer of the second embodiment.

### (First Embodiment)

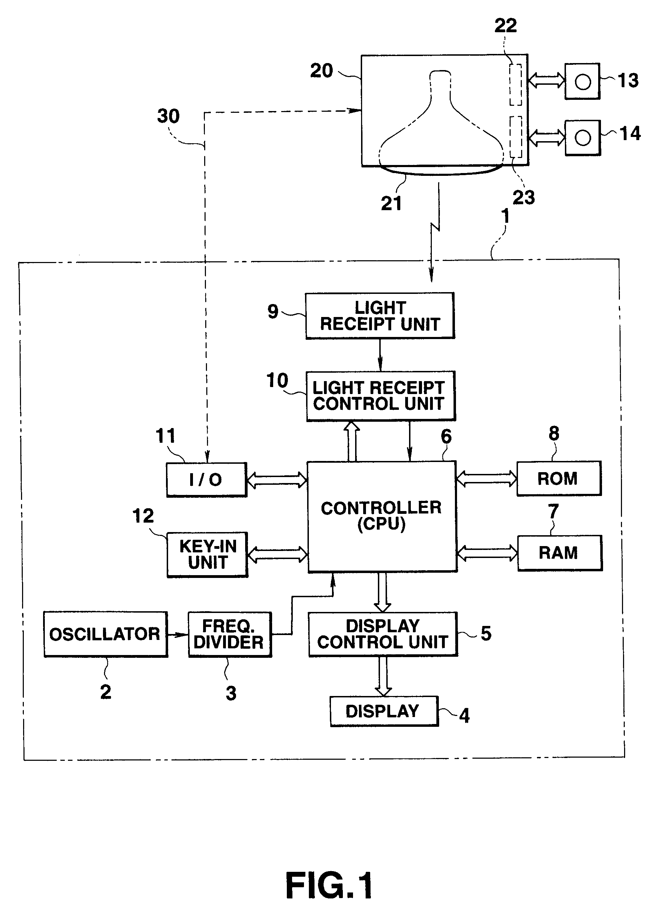

FIG. 1 is a block diagram indicative of the circuit construction of an electronic wristwatch 1 of a first embodiment of an electronic apparatus which uses an information recording medium with the wristwatch being combined with part of a personal computer 20 according to the present invention.

### A. Structure of the Electronic Wristwatch:

In FIG. 1, an oscillator 2 generates a reference clock signal. A frequency divider 3 receives the reference clock signal, divides the reference clock signal and outputs a clock signal required by the electronic wristwatch 1. A display 4 displays various data and includes an LED (light emitting diode), EL (electroluminescence) or liquid crystal or plasma display. A display control unit 5 controls the display 4 in accordance with display data and a control signal fed by a controller 6 to be described in more detail later. A RAM 7 includes a register area and a data area.

### (An Area Map in the RAM):

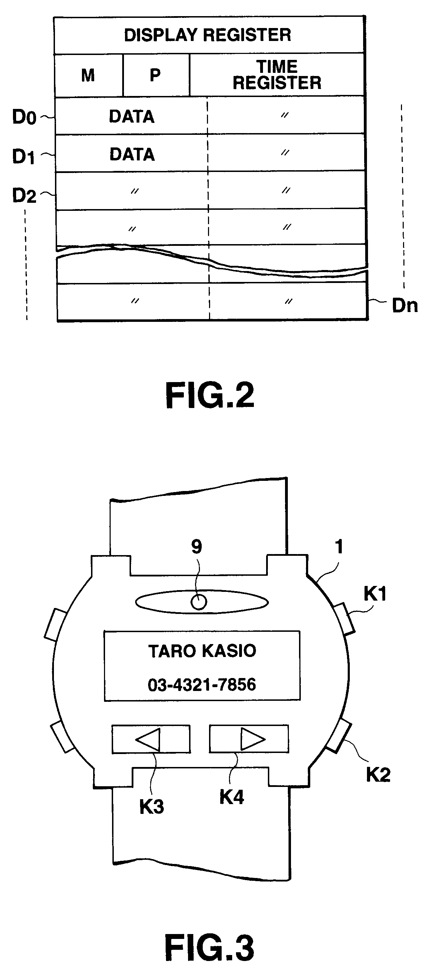

FIG. 2 shows the construction of the RAM 7. In FIG. 2, a display register stores data to be displayed on the display 4. A mode register M changes its data depending on the switching operation of an operational mode. M = 0 implies a time display mode; M = 1, a receipt mode; and M = 2, a memory data display mode. A P register stores an address pointer which points out one of the addresses of registers D₀ - Dₙ. A time register is used to record the current time.

Referring again to FIG. 1, a ROM 8 contains written microprograms which are used to control the controller 6. A light receipt unit 9 receives optical data output by the blinking operation of a part of a display screen of a display 21 of the personal computer 20. The light receipt unit 9 may include a photodiode, phototransistor or CDS. The light receipt unit 9 is provided at an upper center of the front of the electronic wristwatch 1, as shown in FIG. 3. An interface (I/O) 11 is used to transmit/receive data through a cord 30 between the personal computer 20 and the controller 6. A key-in unit 12 is composed of a mode key K1, data receipt key K2 and memory data display keys K3 and K4 with the respective outputs of those keys being input to the controller 6.

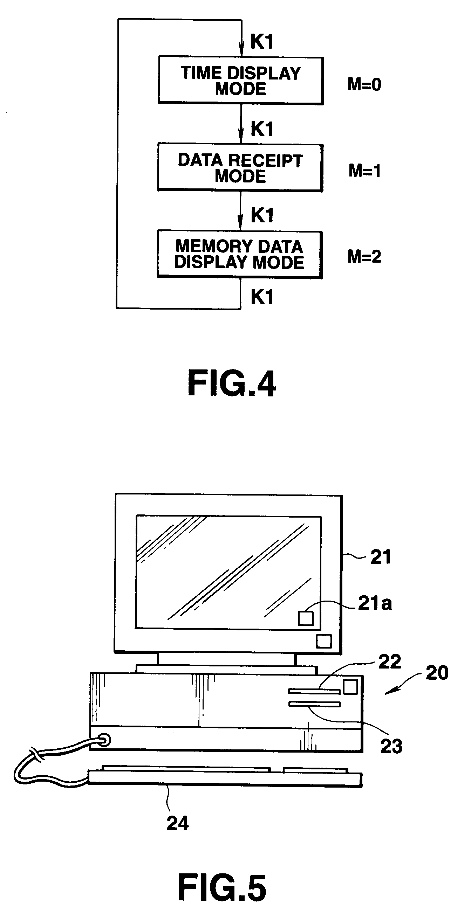

As shown in Fig. 3 (front view), the mode key K1 is provided on an upper right-hand side of the wristwatch body while the data receipt key K2 is provided on a lower right-hand side of the wristwatch body. The memory data display keys K3 and K4 are provided close to each other in a lower portion of the body. The mode key K1 is used to set a time display mode, data reception mode and memory data display mode, as shown in FIG. 4. As the mode key K1 is depressed sequentially, the time display, data receipt and memory data display modes are set in this order in a circulating manner. The data receipt key K2 is used to start the receipt of optical data output from a part 21a (FIG. 5) of the display screen of the display 21 of the personal computer 20. By depressing the data receipt key K2 in the data reception mode, the controller 6 delivers a control signal used to read data to the light receipt control unit 10 such that the light receipt control unit 10 receives the output from the light receipt unit 9 and delivers it to the controller 6.

The controller 6 receives the output in units of one block from the light receipt unit 9 through the light receipt control unit 10, reshapes the waveform of the output, and stores it in a data area of the RAM 7 pointed out by the P register. In this case, since one block is composed of a plurality of data items, the value of the P register is updated for each data item and this data is stored in the data area of the RAM 7. The memory data display keys K3 and K4 are used to read data, stored in the RAM 7, in the memory data display mode. In this case, the memory display key K3 is used to skip data forward while the memory data display key K4 is used to skip data backward. For example, when the memory data display key K3 is depressed by five times to read out five data items and the memory data display key K4 is depressed twice, the data item preceding the last forward read data item by two data items, or the third data item, is read out by the controller 6.

### B. The Driving Construction of a Floppy Disk:

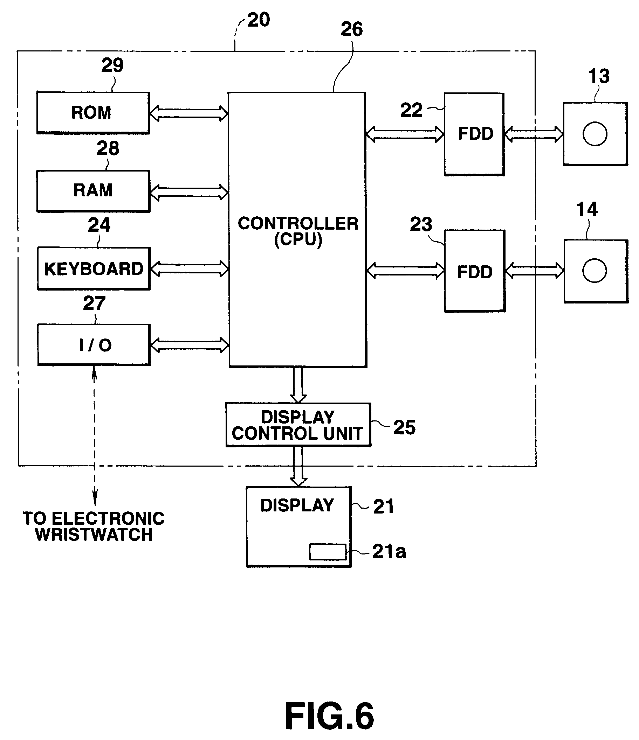

In FIG. 1, a floppy disk (corresponding to an information recording medium) 13 is placed in a floppy disk drive 22 of the personal computer 20. The floppy disk 13 has a program data storage area and an other-data storage area. The program data storage area contains program data which is used to cause a part 21a (FIG. 5) of the display screen of the display 21 of the personal computer 20 to blink to thereby output data optically. In this case, the program data is composed of first and second program data. The first program data is used to store the data keyed in by the keyboard 24 (FIG. 6) of the personal computer 20 in a RAM 28 of the personal computer 20. The second program data is used to optically output the data stored in the RAM 28 or in the data storage area of the floppy disk 13 or 14 by blinking the part 21a of the display screen of the display 21.

As described above, the floppy disk 14 has the data storage area where the data keyed in from the keyboard 24 is stored, and is placed in a floppy disk drive 23 although the personal computer further has another floppy disk drive 22. If the personal computer has only one floppy disk drive, this floppy disk drive is shared by the two floppy disks 14 and 13. In this case, the floppy disk drive 13 where the program data is contained is used first and when data is to be transmitted, the floppy disk 13 is replaced with the floppy disk 14.

### C. Circuit Construction of the Personal Computer 20:

FIG. 6 is block diagram indicative of the circuit construction of the personal computer 20. In FIG. 6, a display control unit 25 controls the display 21 in accordance with display data and a control signal delivered from a controller 26. The display 21 includes a CRT, EL (electroluminescence) or plasma display. An interface (I/O) 27 is used to transmit/receive data directly through the cable 30 between the controller 26 and the electronic wristwatch 1. The keyboard 24 is used to key in data and commands to cause the controller 26 to perform the respective required operations.

The RAM 28 is used as a working area for the controller 26 and an area for storage of program data read from the floppy disk 13 or 14 and data keyed in from the keyboard 24. A ROM 29 contains programs used to control the controller 26. The floppy disk drives 22 and 23 are used to read/write data into/from the floppy disks 13 and 14 under control of the controller 26. The controller 26 reads the program data stored in the program data storage area of the floppy disk 13 through the floppy disk drive 22, stores the program data temporarily in the RAM 28, decodes the program data, and performs processing for data transmission.

When the user keys in data through the keyboard 24 for transmission, the controller 26 first instructs the user to create data. When the user keys in data from the keyboard 24 in response to the instruction, the controller 26 stores the keyed-in data in the RAM 28. This processing is performed each time the key-in operation is performed. When final storage of the data ends, the user keys in data indicative of the ending of the key-in operation. Thus, the controller 26 stores the data stored in the RAM 28 in the data storage area of that of the floppy disks 13 and 14 designated by the user. When storage of data in the floppy disk 13 or 14 ends, the controller 26 waits for an instruction of transmission. When the user keys in the instruction of transmission, the controller 26 reads data stored in the RAM 28, converts the data to display data for transmission and delivers it to the display control unit 25, which blinks the part 21a of the display 21 screen in accordance with the display data.

If the data to be transmitted is already stored in the floppy disk 13 or 14, and that of the floppy disks 13 and 14 which has already stored the data to be transmitted is designated by the keying-in operation, the controller 26 reads the data to be transmitted from the data storage area of the designated one of the floppy disks 13 and 14 through the corresponding floppy disk drive 22 or 23, converts the data to display data to be transmitted, and delivers it to the display control unit 25, which blinks the part 21a of the display 21 screen in accordance with the delivered display data.

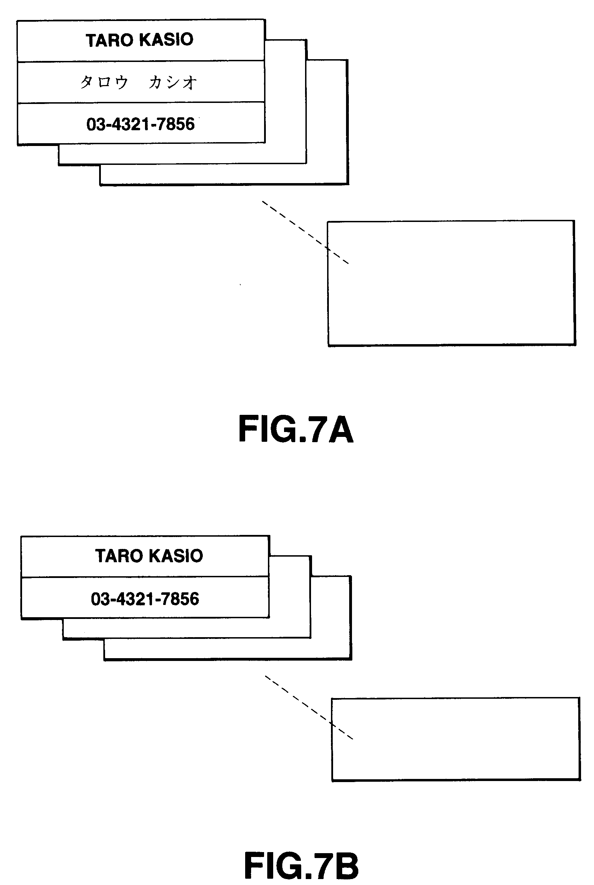

When the data is read from the data storage area of the floppy disk 13 or 14 and converted to the display data, the user determines whether the electronic wristwatch 1 requires all the display data. If not, the user can instruct the transmission of only the required data. For example, as shown in FIG. 7A, if the data stored in the data storage area of the floppy disk 13 or 14 is "TARO KASIO" which is a person's name 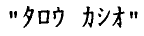
which is the same person's name expressed in Japanese katakana characters and "03-4321-7856" which is his telephone number, and if the electronic wristwatch 1 has no ability to express Japanese katakana characters, the user designates only the data "TARO KASIO", and "03-4321-7856" except for the 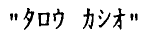
by the keying-in operation and causes the display 21 to blink only the designated data, as shown in FIG. 7B.

### A. Operation of the Electronic Wristwatch:

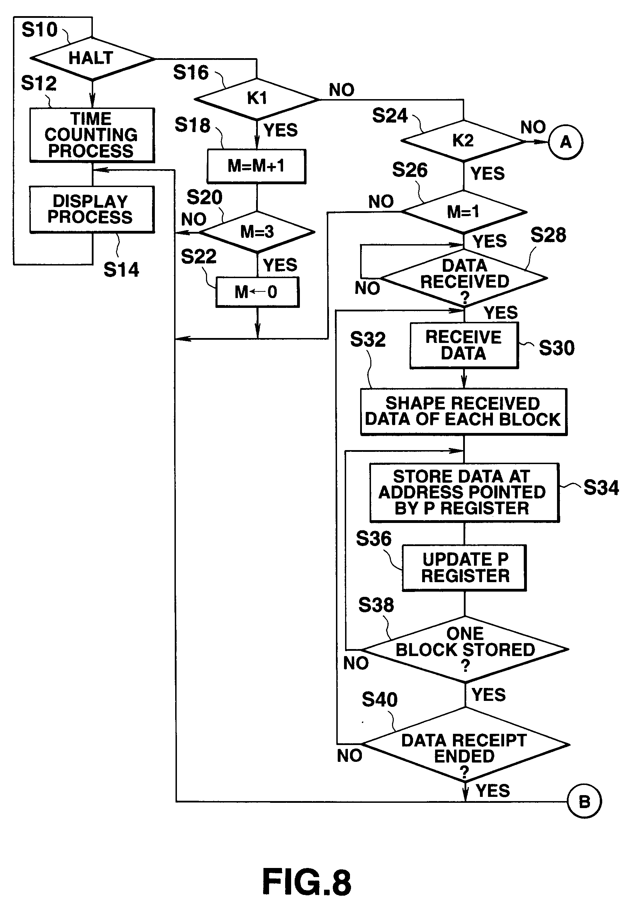

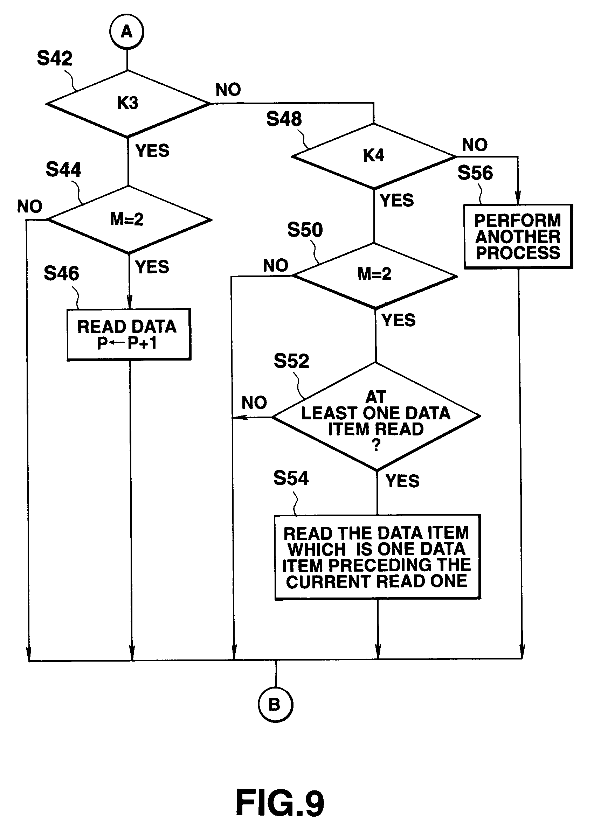

FIGS. 8 and 9 are a flow chart indicative of the operation of the electronic wristwatch 1.

### (a) Time Display:

First, the controller 6 determines at step S10 whether there is any keyed-in data or whether the wristwatch is in a time recording state. More particularly, counting and display of the current time are performed each time the time counting state appears before the mode key K1, data receipt key K2, or memory data display key K3 or K4 is depressed. When any one of those keys is depressed, the corresponding operation is performed. If the mode key K1 is depressed, the selection of a mode is made. In this case, if the time display mode is selected, the current time is displayed. If the data receipt mode is selected, it is displayed that data is now in the receipt. If the memory data display mode is selected, data stored in the registers D₀ - Dₙ of the RAM 7 (FIG. 1) is displayed.

When the controller 6 determines at step S10 that the wristwatch is in the time recording state, the controller 6 performs the time counting process to update the data in the time register of the RAM 7 at step S12 and displays the current time at step S14.

### (b) Mode Selection:

Mode selection is performed at steps S16 - S22. More particularly, when the controller 6 determines at step S10 that any key is depressed, it determines at step S16 whether the mode key K1 has been depressed. If so, control passes to step S18, where the controller 6 increments the value of the M register by one and determines at step S20 whether the value of the M register is "3". If not, the controller 6 performs the display process at step S14. If so at step S20, the controller 6 sets the value of the M register at 0 at step S22. Controls then passes to step S14. In this case, since the initial value of the M register is 0, the value of M register becomes "1" by depressing the mode key K1 once, control passes to the data receipt mode. When the mode key K1 is depressed once in the data reception mode, the value of the M register becomes "2" and control passes to the memory data display mode. When the mode key K1 is depressed once in the memory data display mode, the value of the M register becomes "3" temporarily, but is immediately set at "0", and control passes to the time display mode.

### (c) Data Reception:

Data reception is performed at steps S24 - S40. More particularly, when the controller 6 determines at step S16 that the mode key K1 has not been depressed, the controller 6 determines at step S24 whether the data receipt key K2 has been depressed. If so, the controller 6 determines at step S26 whether the value of the M register is "1" or whether the mode is the data receipt one. If so, the controller 6 determines at step S28 whether there is any data output or whether any data has been output optically by blinking the part 21a of the personal computer display 21. If not, control iterates the step S28. When the controller 6 determines that the data has been output, it performs data receipt in unit of one block at step S30.

Control then passes to step S32, where the controller 6 shapes the waveform of the received data, and converts the resulting data to the original data. Control then passes to step S34, where the controller 6 stores the data in the data area of the RAM 7 pointed out by the P register. Thereafter, at step S36 the controller 6 updates the value of the P register and determines at step S38 whether all the data of one block has been stored. If not, control returns to step S34, where the controller 6 stores the next data. If so at step S38, the controller 6 determines at step S40 whether the data reception has been completed. If not, control returns to step S30, where the controller 6 continues the data reception. If so at step S40, control passage to step S14.

### (d) Processing in the Memory Data Display Mode:

The controller 6 performs processing in the memory data display mode at steps S42 - S54. More specifically, when the controller 6 determines at step S24 that the data receipt key K2 has not been depressed, it determines at step S42 whether the memory data display key K3 has been depressed. If so, control passes to step S44, where the controller 6 determines whether the value of M register is "2" or whether the mode is the memory data display one. If so, at step S46 the controller 6 reads data stored in that of the registers D₀ - Dₙ of the RAM 7 addressed by the P register, delivers the data to the display register, and increments the value of the register P by one.

When the memory data display key K3 is first depressed at this point in time, the controller 6 reads the first data (in the register D₀) of all the stored data. Thereafter, the controller 6 displays the data at step S14; that is, delivers the read data and the control signal to the display control unit 5 to thereby cause the display 4 to display the delivered data. When the memory data display key K3 is depressed again, the controller 6 reads the second data (in the register D₁) from the RAM 7. In this way, as the memory data display key K3 is depressed sequentially, the controller 6 reads corresponding data from the RAM 7.

When the controller 6 determines at step S44 that the mode is not the memory data display one, the controller performs no processing operation and control passes to step S14.

When the controller 6 determines at step S42 that the memory data display key K3 has not been depressed, it determines at step S44 whether the memory data display key K4 has been operated. If so, the controller 6 determines at step S50 whether the value of the M register is "2" or whether the mode is the memory data display one. If so, control passes to step S52, where the controller 6 determines whether at least one data item has been read out. If not, the controller 6 performs no processing operation and control passes to step S14.

When the controller 6 determines at step S52 that at least one data item has been read out, the controller 6 reads a data item which is one data item preceding the current read one at step S54. For example, if the fifth data item has been read now, the controller 6 reads the fourth data item. Thereafter, the controller 6 displays that data item at step S14 or delivers the read data item and a control signal to the display control unit 5 to cause same to display the delivered data on the display 4. When the memory data display key K4 continues to be depressed, the controller 6 reads the third data item from the RAM 7. In this way, each time the memory data display key K4 is depressed, the controller 6 reads from the RAM 7 a data item preceding the current read data item by one data item.

When the controller 6 determines at step S50 that the mode is not the memory data display one, the controller 6 performs no processing operation, and control passes to step S14.

### (e) Another Keying-in Operation:

When the controller 6 determines at step S48 that the memory data display key K4 has not been depressed, it performs another keying operation at step S56. Thereafter, the controller 6 passes to step S14, where the controller 6 performs display corresponding to the depressed key.

### B. Operation of the Personal Computer:

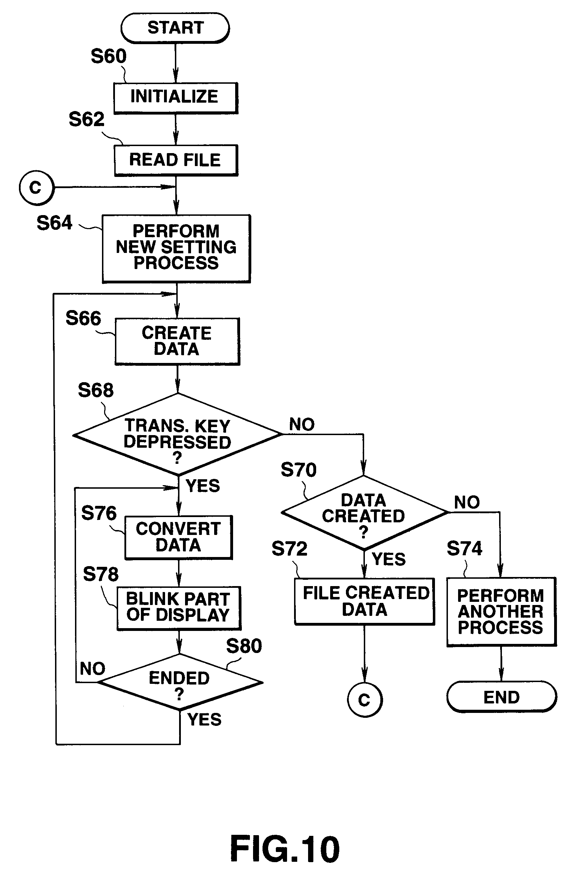

FIG. 10 is a flow chart of indicative of the operation of the personal computer 20.

### (a) Data Creation:

The controller 26 performs a data creating operation at steps S60 - S72. First, at step S60 the controller 26 initializes the RAM 28 and other elements concerned. At step S62 the controller 26 reads a file or program data from the floppy disk 13. Thereafter, control passes to step S64, where the controller 26 performs a new setting operation including storage of data in the storage area of the floppy disk 13 or 14 and creates data at step S66. Each time the user keys in data from the keyboard 24, the controller 26 stores the data in the RAM 28.

The controller 6 then determines at step S68 whether the transmission key, for example, the function key "F1" of the keyboard 24, has been depressed. If not, at step S70 the controller 26 determines whether the creation of data has ended. For example, assume that the operation of the function key "F3" of the keyboard 24 implies ending of the data creation. Thus, the controller 26 determines whether it has been operated. When the controller 26 determines that the data creation has ended in this determination, control passes to step S72, where the controller 26 files or stores the created data in the data storage area of the designated one of the floppy disks 13 and 14. Thereafter, control passes to step S64. If not at step S70, or when the controller 26 determines that a key-in operation which performs another process has been performed, at step S74 the controller 26 performs that process (for example, a plotting operation or a calculating operation, using the personal computer, etc.).

### (b) Transmission:

The controller 26 performs data transmission at steps S68 - S80. More particularly, when the controller 26 determines at step S68 that the transmission key has been operated, control passes to step S76, where the controller 26 converts the data created and stored in the RAM 28. That is, the controller 26 reads the data stored in the RAM 28 and converts it to display data to be transmitted. Control then passes to step S78, where the controller 26 blinks the part 21a of the display 21 screen in accordance with the display data. That is, the controller 26 delivers the display data and a control signal to the display control unit 25 such that the part 21a of the display screen blinks in accordance with the display data to output the data optically. The output data is then received optically by the light receipt unit 9 of the electronic wrist watch 1 and stored in the RAM 7.

After the controller 26 delivers the display data to the display control unit 25, it determines at step S80 whether the data transmission has ended. If not, control returns to step S76, whether the controller 26 continues the data conversion and transmission. If so at step S80, control returns to step S66 where the controller 26 creates the next data.

If the data to be transmitted is already stored in the data storage area of the floppy disk 13 or 14, data on the designation of that floppy disk is keyed-in. In response to this operation, the controller 26 reads data from the data area of the designated one of the floppy disks 13 and 14 through the corresponding floppy disk drive 22 or 23, converts this data to display data to be transmitted, and delivers it to the display control unit 26. The controller 26 then determines whether all the data is needed by the electronic wrist watch 1 before the read data is converted to the display data. If the controller 26 determines that there is unnecessary data included, it converts only the data excluding the unnecessary data to display data. For example, as described above, when the data stored in the data storage area of the floppy disk 13 or 14 is "TARO KASIO" (Person's name), 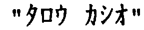
(his name expressed in Japanese katakana characters) and "03-4321-7856" (his telephone number), and the electronic wrist watch 1 has no function of displaying Japanese katakana characters, the controller 26 converts only "TARO KASIO" and "03-4321-7856" except for the 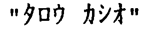
to display data.

When the floppy disk 13 is placed in the personal computer 20, as described above, the personal computer 20 reads program data stored in the program data storage area of the floppy disk 13 and creates data in accordance with the program data. The controller 26 then stores the created data in the RAM 28 and stores it also in the data storage area of the floppy disk 13 or 14. The controller 26 then reads data stored in the RAM 28 in accordance with a signal instructing the transmission of the data, converts the data to display data and delivers same to the display control unit 25. Thus, the part 21a of the display screen 21 blinks to thereby output the data optically. The output data is received optically by the light receipt unit 9 of the electronic wrist watch 1, the wave form of the data is reshaped and the resulting data is stored in the RAM 7.

Thus, the data is output from the personal computer 20 to the wrist watch 1 without using any interface or cable. Even a rank beginner can transmit data easily without requiring any knowledge of hardware which performs data transmission. No connectors are required which connect cables to the electronic wrist watch 1, so that the cost of the wristwatch body does not increase. An increase in the cost of the wristwatch body due to the addition of a data transmitting function is minimized. Since neither connectors nor cables are required, data transmission is possible even as the wrist watch 1 is worn on a wrist.

The present invention is not restricted to the embodiments described and illustrated above. Various changes and modifications are possible without departing from the spirit and scope of the present invention. For example, more specifically, the changes and modifications may be achieved as follows:
(a) The electronic notebook or desk-top type computers may have the function of receiving optical data. In this case, no interfaces nor cables are needed as in the above embodiments. No knowledge of hardware which performs data transmission is required. No connectors for data transmission are required to be provided for electronic notebooks and desk-top type computers.
(b) Optical data receiving functions may be provided in digital recording devices such as DATs (digital audio tape recorders), MDs (minidisks) and DCCs (digital compact cassette recorders). By doing so, a large amount of data can be recorded;
(c) The information recording mediums may be magnetic disks, opto-magnetic disks, optical disks or semiconductor memories such as ROMs in addition to the floppy disk 13. In this case, a reader is required which depends on each of the respective mediums, of course. Especially, the magnetic disks, opto-magnetic disks and optical disks are capable of handling a large amount of data, and semiconductor memories such as ROMs can reduce the read/write times;
(d) The floppy disk 13 may have any ones of the conventional sizes and types. The floppy disk may contain a program which is the component of the present invention, data and other programs together. Briefly, the information recording mediums are only required to be capable of storing programs and data necessary for carrying out the present invention;
(e) In addition to the personal computer 20, the present invention is applicable to all kinds of electronic computers including work stations, minicomputers and note-type (portable) personal computers in addition to the personal computer 20.

### (Second Embodiment):

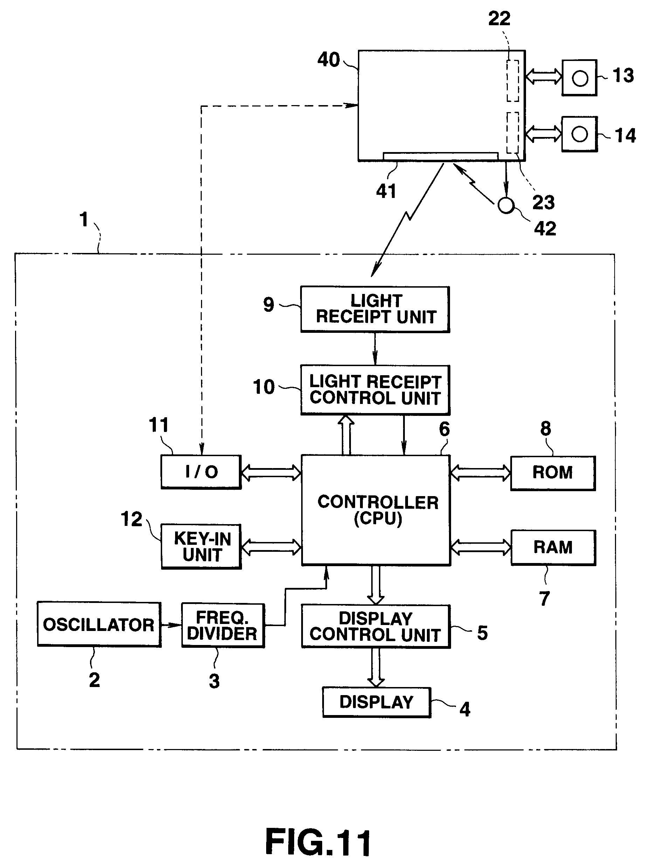

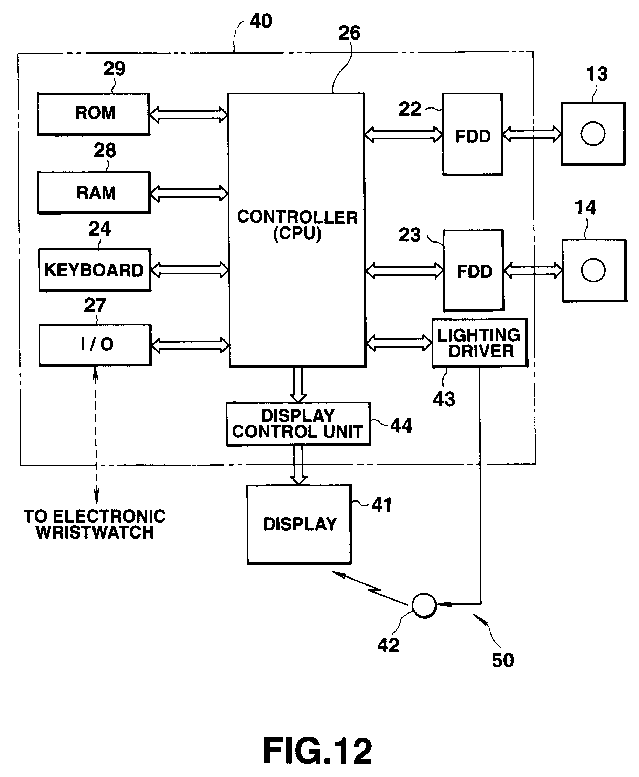

FIG. 11 is a block diagram indicative of the combined circuit construction of an electronic wrist watch 1 and a personal computer 40 as a second embodiment of an electronic apparatus which uses an information recording medium according to the present invention. FIG. 12 is block diagram indicative of the details of the circuit construction of the personal computer 40. The same reference numeral is used to identify the same element throughout FIGS. 11, 12 and FIGS. 1 and 6, and further description thereof will be omitted.

While in the first embodiment the part 21a of the display 21 screen is blinked to output data optically, a liquid crystal or non-light emission type display is generally difficult to perform a blinking display operation. In contrast, the second embodiment has a structure where a non-light emission type display such as a liquid crystal display 41 is capable of outputting data optically.

In FIG. 11, the display 41 is a non-light emission type (liquid crystal) display, as described above, and displays various data. A light source 42 includes a light emitting diode, laser or lamp disposed before the display 41. In this case, the light source 42 is fixed to a support stand (not shown). As shown in FIG. 12, the light source 42 is driven by a lighting driver 43, which is controlled by a controller 26. A display control unit 44 controls the display 41 in accordance with display data and a control signal from the controller 26.

When the transmission key (not shown) of the keyboard 24 is depressed in this arrangement, the controller 26 converts the data stored in the RAM 28 to display data and delivers same along with a control signal to the display control unit 44 such that a part of the display screen of the display 41 blinks. The controller 26 simultaneously delivers the control signal and a signal indicative of the start of lightening of the light source 42 to the lighting driver 43 to thereby lighten the light source 42. When the light thus produced impinges on and is reflected by the display screen of the display 41, the reflected light blinks on the basis of the light blinking operation of the display 41. The reflected blinking light from the display 41 is received by the light receipt unit 9 of the wristwatch 1 (that is, data is output optically in the form of reflected light) and the corresponding optical data is stored in the RAM 7.

## Claims

1. An information recording medium (13) placed in an electronic device (20, 40) which includes a key-in unit (24) and a display (21, 41), comprising:
data storage means for storing data; and
program data storage means which contains program data for optically outputting data stored in said data storage means by optically blinking a part (21a) of said display (21, 41).

2. An information recording medium (13) according to Claim 1, wherein the electronic device (20, 40) has irradiation means (42) for irradiating the display with light, and said program data storage means of the information recording medium (13) causes a reflected portion of the irradiated light from the display (21, 41) to blink.

3. An information recording medium (13) according to Claim 1, wherein the electronic device (20, 40) in which the information recording medium (13) is placed comprises a personal computer (20, 40).

4. An information recording medium (13) according to Claim 1, wherein the data stored in said data storage means comprises data keyed in from the key-in unit (24) of the electronic device (20, 40).

5. An information recording medium (13) according to Claim 1, wherein the program data storage means further comprises a control program for storing the data keyed in from the key-in unit (24) in the data storage means.

6. An information recording medium (13) according to Claim 1, wherein the information recording medium (13) comprises a floppy disk (13).

7. An information recording medium (13) placed removably in an electronic device (20, 40) which includes a key-in unit (24), data storage means for storing the data keyed in from the key-in unit (24), and a display (21, 41), comprising:
program data storage means which contains program data used to optically output the data stored in said data storage means by causing a part (21a) of the display (21, 41) of the electronic device (20, 40) to blink.

8. An information recording medium (13) according to Claim 7, wherein the electronic device (20, 40) has irradiation means (42) for irradiating the display (21, 41) with light, and said program data storage means of the information recording medium (13) causes a reflected portion of the irradiated light from the display (21, 41) to blink.

9. An information recording medium (13) according to Claim 7, wherein the electronic device (20, 40) in which the information recording medium (13) is placed comprises a personal computer (20, 40).

10. An information recording medium (13) according to Claim 7, wherein the data stored in said data storage means comprises data keyed in from the key-in unit (24) of the electronic device (20, 40).

11. An information recording medium (13) according to Claim 7, wherein the information recording medium (13) comprises a floppy disk (13).

12. An information recording medium (13) placed removably in an electronic device (20, 40) which includes a key-in unit (24), data storage means and a display (21, 41), comprising:
program data storage means for storing first program data for storing the data keyed in by the key-in unit (24) in the data storage means, and second program data for optically outputting the data stored in the data storage means by blinking a part (21a) of the display (21, 41) of the electronic device (20, 40).

13. An information recording medium (13) according to Claim 12, wherein the electronic device (20, 40) comprises irradiation means (42) for irradiating the display (21, 41) with light, and the second program data stored by the program data storage means causes the reflected light from the display (21, 41) to blink.

14. An information recording medium (13) according to Claim 12, wherein the electronic device (20, 40) in which the information recording medium (13) is placed comprises a personal computer (20, 40).

15. An information recording medium (13) according to Claim 12, wherein the information recording medium (13) comprises a floppy disk (13).

16. An electronic apparatus comprising:
an information recording medium (13) placed removably in a personal computer (20, 40) which includes a key-in unit (24) and a display (21, 41); and
an electronic device (1) for receiving data, stored in the information recording medium (13), through the personal computer (20, 40);
said information recording medium (13) comprising:
first storage means for storing the data; and
second storage means which contains first program data for causing the first storage means to store the data keyed in by the key-in unit (24) and second program data for causing the data stored in said first storage means to be output optically from the display (21, 41) of the personal computer (20, 40),
said electronic device (1) comprising:
light receipt means (9) for receiving data output optically from the display (21, 41); and
optical data storage means (7) for storing the data received by the light receipt means.

17. An electronic apparatus according to Claim 16, wherein the personal computer (20, 40) comprises irradiation means (42) for irradiating the display (21, 41) with light, and the second program data stored by the second program data storage means causes a reflected portion of the irradiated light from the display (21, 41) to blink.

18. An electronic apparatus comprising:
an information recording medium (13) placed removably in a personal computer (20, 40) which includes a key-in unit (24), data storage means and a display (21, 41);
an electronic device (1) for receiving data stored in the data storage means through the personal computer (20, 40);
said information recording medium (13) comprising program data storage means which contains first program data for causing the data storage means to store the data keyed in by the key-in unit (24) and second program data for causing the data stored in said data storage means to be output optically from the display (21, 41) of the personal computer (20, 40);
said electronic device (1) comprising:
light receipt means (9) for receiving the data output optically from the display (21, 41); and
optical data storage means (7) for storing the data received by said light receipt means (9).

19. An electronic apparatus according to Claim 18, wherein the personal computer (20, 40) comprises irradiation means (42) for irradiating the display (21, 41) with light, and the second program data stored by said program data storage means causes a reflected portion of the irradiated light from the display (21, 41) to blink.
